# EUROPEAN PATENT SPECIFICATION

(11) **EP 3 622 796 B1**
(45) Date of publication and mention of the grant of the patent: **29.12.2021**
(21) Application number: 19195075.7
(22) Date of filing: 03.09.2019
(51) Int. Cl.: A01D 34/49, A01D 43/063, A01D 43/077

(54) **MULTIFUNCTION CUTTING DEVICE FOR LAWNMOWER**
MULTIFUNKTIONALE SCHNEIDVORRICHTUNG FÜR RASENMÄHER
APPAREIL DE COUPE MULTIFONCTIONNEL POUR TONDEUSE

(30) Priority: 17.09.2018 IT 201800008648
(43) Date of publication of application: 18.03.2020
(73) Proprietor: Officine Bieffebi S.p.A., 46023 Gonzaga (Mantova) (IT)
(72) Inventor: FERRARI, Alessio, 46023 Gonzaga (MN) (IT)
(74) Representative: Corradini, Corrado

(56) References cited:
- US-A- 2 990 667
- US-A- 2 999 346
- US-A- 3 657 867
- US-A- 3 753 340

## Description

### TECHNICAL FIELD

The present invention relates to the field of agricultural machines, and in particular machines for cutting the grass. The present invention was developed in particular with regards to a lawnmower, and even more specifically, with regards to a cutting device for a lawnmower.

### EXISTING TECHNIQUE

Self-moving lawnmowers driven by a user seated on board are known in the field of agricultural machines for cutting the grass.

Lawnmowers of this type comprise a support frame provided with a plurality of wheels distributed in pairs on a front axle and on a rear axle.

At least one pair of wheels is motorized so as to provide the machine with the necessary traction.

Moreover, at least one wheel is steering and is subordinate to a steering wheel or to a similar manual control member, which is located at a driving station provided with a seat for the user.

A device for cutting the grass is also connected to the frame of the lawnmower, which cutting device generally comprises a rotating cutting tool and a guard adapted to accommodate and cover said cutting tool.

In certain embodiments, the cutting tool comprises a plurality of blades that are fastened in an oscillating manner to a support shaft adapted to rotate about a horizontal rotation axis.

In most of these embodiments, the grass cut by the cutting tool is left directly on the ground (e.g. mulching cutting), where it may act as natural fertilizer and/or preserve the moisture of the ground.

As described in document DE19607350, the cutting tool outlined above may however also be combined with an auxiliary system adapted to convey the cut grass towards a storage container, which usually is located on the frame of the lawnmower behind the driving station.

This auxiliary system comprises an auger, which is provided with a screw element contained within a casing and having a rotation axis parallel to the one of the cutting tool.

The outer casing of the auger is provided with a broad inlet opening, which is put in communication with the inner volume of the guard of the cutting tool, and with an outlet opening that is put in communication with the storage container.

In this manner, the auger is adapted to receive the grass just cut by the oscillating blades of the cutting tool and to convey it towards the outlet opening where a second auger takes care of transferring the cut grass into the storage container.

A drawback of these lawnmowers however consists of the fact that the auxiliary system for collecting the cut grass is always operating and does not allow a cut without collection (e.g. mulching cutting) to be performed.

US 3 753 340 A and US 2 999 346 A both disclose cutting devices with all the features of the preamble of independent claim 1.

### DESCRIPTION OF THE INVENTION

It is the object of the present invention to resolve the mentioned drawback of the known technique by making available a cutting device for a lawnmower that can perform both a cutting without collection (e.g. mulching cutting) and a cutting with collection of the cut grass.

It is a further object of the present invention to achieve the mentioned object within the scope of a simple, rational and affordable solution.

Such objects are achieved by the features of the invention indicated in independent claim 1. The dependent claims outline preferred and/or particularly advantageous aspects of the invention.

The present invention makes available a cutting device for a lawnmower, preferably for a self-moving lawnmower, comprising:
- a cutting tool having horizontal rotation axis,
- a guard adapted to delimit an inner volume wherein there is accommodated the cutting tool, and
- a system for collecting the cut grass,
wherein said collection system comprises:
- a casing provided with at least one inlet opening and with one outlet opening for the cut grass, and
- at least one conveyor member placed inside the casing and adapted to convey the cut grass from the inlet opening towards the outlet opening,
   and wherein the guard of the cutting tool comprises at least one wall that is movable between a first operating position wherein the inner volume of the guard communicates with the inlet opening of the casing of the collection system, and a second operating position wherein the inner volume of the guard is separated from the inlet opening of the casing of the collection system.

Thanks to this solution, when the movable wall is in the first operating position, the grass cut by the cutting tool may enter the collection system, for example to be accumulated in a specific storage container.

Vice versa, when the movable wall is in the second operating position, the cut grass remains confined inside the guard and is left on the ground.

The cutting device of the present invention is therefore advantageously capable of executing cutting with collection of the cut grass and of cutting without collection (e.g. mulching cutting).

Furthermore, the conveyor member of the collection system of the invention is a screw element having rotation axis parallel to the rotation axis of the cutting tool. In this manner, the collection system is practically made in the form of an auger.

According to one aspect of the invention, the inlet opening of the casing of the collection system may have a main size that extends parallel to the rotation axis of the cutting tool.

In this manner, the inlet of the cut grass into the collection system is facilitated and made more efficient when the movable wall is in the first operating position.

In certain embodiments, the casing of the collection system may comprise one inlet opening alone, which main size has a length at least equal to the length of the cutting tool.

In other embodiments, the casing of the collection system could however comprise a plurality of inlet openings, which may for example be mutually aligned along a direction parallel to the rotation axis of the cutting tool.

Both these embodiments may indeed ensure an effective inlet of the cut grass into the collection system.

Naturally, in the case in which the casing of the collection system has a plurality of inlet openings, it is preferable for the movable wall, in the first operating position, to be adapted to allow the communication of all inlet openings with the inner volume of the guard and in the second operating position, for it to be adapted to separate the inner volume of the guard with respect to all the inlet openings.

According to another aspect of the invention, the movable wall may be adapted to move between the first operating position and the second operating position by rotating about a hinging axis parallel to the rotation axis of the cutting tool.

This aspect of the invention provides a particularly simple and effective solution for actuating the movable wall between the first operating position and the second operating position.

A further aspect of the invention provides for the movable wall to extend along the direction of the hinging axis for a length at least equal to the length of the cutting tool. Thanks to this solution, it is advantageously possible to make safer the opening and the closing of the inlet opening of the collection system on the side of the movable wall.

According to another aspect of the invention, the cutting device may comprise a control apparatus accessible from the outside of the guard, which is adapted to move the movable wall between the first operating position and the second operating position. In this manner, the reconfiguration of the cutting device from the cutting mode with collection of the grass to the cutting mode without collection (mulching cutting) and vice versa is made particularly convenient.

The control apparatus may be manually actuated or alternatively be motorized.

According to one aspect of the invention, the control apparatus may comprise a lever hinged to the outside of the guard according to a preset rotation axis, which is mechanically connected to the movable wall so that a rotation of the lever about the rotation axis thereof causes a rotation of the movable wall about the hinging axis.

In this manner, an extremely simple solution is obtained for actuating the movable wall from the outside of the guard.

Another aspect of the invention provides for the lever to be associated with a locking device adapted to lock the movable wall respectively in the first operating position or in the second operating position.

Thanks to this solution, it is advantageously possible to ensure that the movable wall does not accidentally move during use.

For example, said locking device may comprise a bushing fastened to the lever, which is adapted to align with a first bushing fastened to the guard when the movable wall is in the first operating position, and to align with a second bushing fastened to the guard when the movable wall is in the second operating position, a pin being provided, which is adapted to engage in the bushing of the lever and simultaneously in the first or in the second bushing of the guard.

In this manner, an extremely reliable and simply made solution is obtained for locking the movable wall in the first operating position or in the second operating position.

According to one aspect of this solution, the pin may be inserted in the bushing of the lever so as to slide between an extracted position wherein it is adapted to engage in the first or in the second bushing of the guard, and a retracted position wherein it is adapted to free said engagement.

Thanks to this solution, the pin constantly remains associated with the lever, thus avoiding it from being lost.

In this context, the lever may possibly also be associated with a spring adapted to push the pin towards the extracted position.

In this manner, it is ensured that the pin may not be accidentally removed from the first or from the second bushing of the guard, thus releasing the movable wall in undesired manner.

In one embodiment, said screw element may comprise:
- an auger shaft,
- a first helicoid fastened to a first portion of the auger shaft, and
- a second helicoid fastened to a second portion of the auger shaft and having opposite winding direction with respect to the first helicoid,
wherein said first and second helicoid are axially separated and spaced apart from each other, thus leaving uncovered a central portion of the auger shaft.

Thanks to this solution, the two helicoids of the screw element are capable of conveying the cut grass towards the central part of the auger, from where it may be removed in a relatively simple manner through the outlet opening.

To this end, a further aspect of the invention provides for the cutting device to also comprise a grass accelerator placed inside the casing of the collection system to receive the grass conveyed by the screw element and push it towards the outlet opening.

According to a different aspect of the invention, the cutting tool may comprise:
- a support shaft, and
- a plurality of oscillating cutting blades fastened to said support shaft.

This solution allows obtaining a cutting of the grass that is substantially by means of chopping.

Finally, another embodiment of the present invention makes available a lawnmower comprising a support frame with which the cutting device outlined above is associated, and preferably a collection container operatively connected to the outlet of the casing of the collection system.

This embodiment substantially results in the same effects outlined above, in particular the one of allowing the lawnmower to selectively perform a cut with collection of the cut grass or a cut without collection (e.g. mulching cutting).

### BRIEF DESCRIPTION OF THE DRAWINGS

Further features and advantages of the present invention will become apparent from the following description, given only by way of example, with reference to the accompanying drawings, in which:
- figure 1 is a schematic assembly view of a lawnmower comprising a cutting device according to the present invention;
- figure 2 is a cross-sectioned view of the cutting device according to the line II-II of figure 4;
- figure 3 is a cross-sectioned view of the cutting device according to the line III-III of figure 4;
- figure 4 is a plan view of a cutting device according to one of the embodiments of the present invention;
- figure 5 is a plan view of a cutting device according to a further embodiment of the present invention;
- figure 6 is a cross-sectioned view of the cutting device according to the line VI-VI of figure 5;
- figure 7 is a plan view of a cutting device according to another embodiment of the present invention;
- figure 8 is a cross-sectioned view of the cutting device according to the line VIII-VIII of figure 7;
- figure 9 is a side and partial view of the cutting device of figure 1, shown in cutting configuration without collection of the cut grass (e.g. mulching cutting);
- figure 10 is the view of figure 9 with the cutting device shown in cutting configuration with collection of the cut grass; and
- figure 11 is the cross-section XI-XI indicated in figure 9, shown in enlarged scale.

### IMPROVED METHOD FOR IMPLEMENTING THE INVENTION

The accompanying drawings show a self-moving lawnmower 10 of the type adapted to be driven by a user seated on board.

The lawnmower 10 comprises a support frame 20, on which there is installed a plurality of wheels resting on the ground, of which a pair of front wheels 21 arranged coaxial on a front axle, and a pair of rear wheels 22 arranged coaxial on a rear axle.

In the front part of the support frame 20, there is a driving station that comprises a seat 25 fastened on a platform 26 of the support frame 20.

In the rear part of the support frame 20, there is arranged a container 50 wherein the cut grass may be accumulated.

A cutting device 40 is also connected to the support frame 20.

The cutting device 40 preferably is connected to the support frame 20 in an articulated manner and is provided with at least one front caster wheel 42 so as to oscillate and favour the inclinations of the ground.

The cutting device 40 comprises a guard 60, which may be substantially shaped like a bell having the concavity facing downwards.

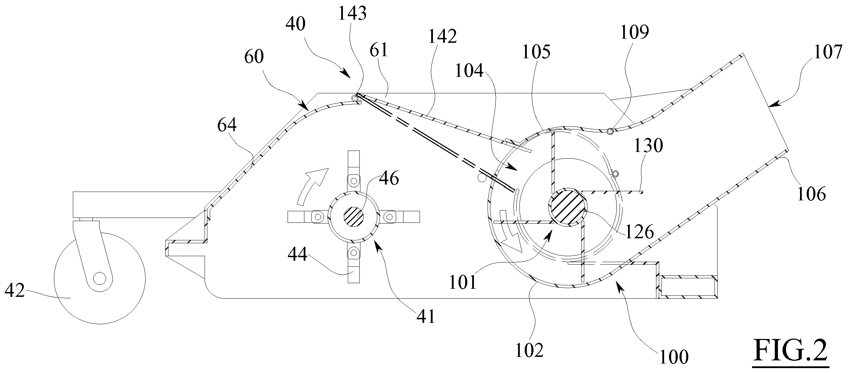

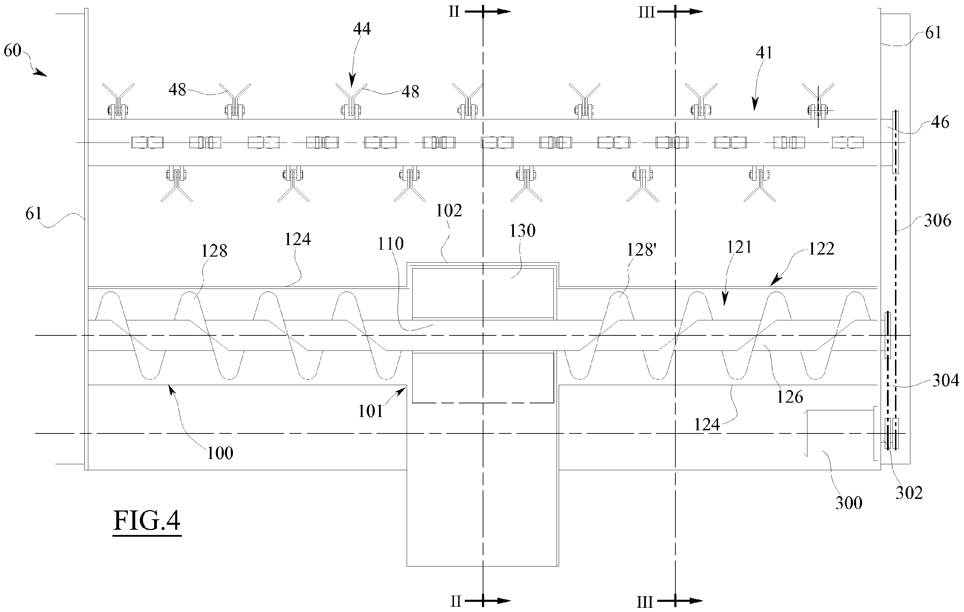

For example, the guard 60 may comprise at least one pair of opposed vertical lateral sides 61 (see fig. 4) oriented parallel to the direction of travel, and a covering wall 64 (see fig. 2) interposed between said lateral side 61.

The covering wall 64 may extend in the front portion of the guard 60, thus facing the caster wheel 42.

The cutting device 40 is also provided with a cutting tool - indicated globally with 41 - having a horizontal rotation axis and arranged inside the guard 60.

As better shown in figure 4, said cutting tool 41 comprises a plurality of oscillating blades 44 connected to a support shaft 46, which is rotatably coupled inside the guard 60 so as to have a horizontal rotation axis.

In particular, the opposite ends of the support shaft 46 may be rotatably supported by the two opposed lateral sides 61 of the guard 60, which latterly delimit the inner volume in which the cutting tool 41 is accommodated.

The oscillating blades 44 may comprise a plurality of pairs of identical curved sheets 48 adapted to define just as many cutting elements.

Each pair of curved sheets 48 may be articulated to the support shaft 46 by means of a pair of brackets protruding radially from the support shaft 46, and a nut and bolt assembly.

The curved sheets 48 of each oscillating blade 44 are arranged in such a manner that the free ends thereof diverge from each other.

In this manner, the rotation of the support shaft 46 - indicated in clockwise direction in figure 2 - brings the oscillating blades 44 into rotation, which cut the grass and project it towards the rear part of the cutting device 40.

The cutting device 40 may comprise, at this rear part, an auger for collecting the cut grass, generically indicated with number 100 in the accompanying drawings.

As shown in figure 4, the auger 100 comprises a screw element 121 having rotation axis parallel to the rotation axis of the cutting tool 41, and a casing 122 adapted to contain said screw element 121.

In particular, the screw element 121 comprises an auger shaft 126 on the lateral portions of which there are made two helicoidal elements or helicoids 128 and 128'. The auger shaft 126 may be supported and rotatably coupled to the lateral sides 61 of the guard 60 so as to be interposed between the latter, for example in the retracted position with respect to the support shaft 46 of the cutting tool 41.

The two helicoids 128 and 128' are axially separated and spaced apart from each other, thus leaving uncovered a central portion 110 of the auger shaft 126.

The two helicoids 128 and 128' also have an opposed inclination (that is a mutually opposite winding direction) in such a manner that in use, the rotation of the auger shaft 126 allows both the helicoids to convey the grass towards the centre of the casing 122, that is towards the central portion 110 of the auger shaft 126.

The auger shaft 126 may be put into rotation by an actuation system adapted to simultaneously also put into rotation the support shaft 46 of the cutting tool 41.

For example, the actuation system may comprise a single motor 300 provided with a motor shaft 302 on which there are engaged two belts, of which a first belt 304 connected to the auger shaft 126 and a second belt 306 connected to the support shaft 46.

The pulleys on which the belts 304 and 306 are wound may be sized to actuate the auger shaft 126 and the cutting tool 41 substantially at the same speed or more preferably, to allow a rotation of the cutting tool 41 at a greater speed with respect to the rotation speed of the auger shaft 126.

The actuation system naturally may be made according to several and different embodiments that fall within the knowledge of a skilled technician in the field.

For example, the belts 304 306 could be replaced with chains, with auger gears or with any other motion transmission system.

With respect to that described and illustrated hereto, it is also possible to provide different embodiments of the auger 100.

For example, it is possible to provide an auger 100 comprising two separate screw members axially aligned and having respective helicoids with equal inclination (winding direction), which are put into rotation according to opposite directions.

Returning to figure 4, the casing 122 of the auger 100 may comprise a containment body 102 having substantially cylindrical shape or in any case tubular shape with arched cross-section, which is adapted to coaxially contain the central portion 110 of the auger shaft 126.

The containment body 102 has, at the lateral surface thereof, an inlet opening 104 of the cut grass facing towards the cutting tool 41 (see fig. 2).

The inlet opening 104 is substantially shaped like a slit that has a main size in direction parallel to the rotation axis of the cutting tool 41 and that preferably extends for the whole length of the containment body 102.

In a position opposed to the inlet opening 104, the lateral surface of the containment body 102 has a conduit 106 that originates laterally from the containment body 102 and defines an outlet opening 107 for the cut grass.

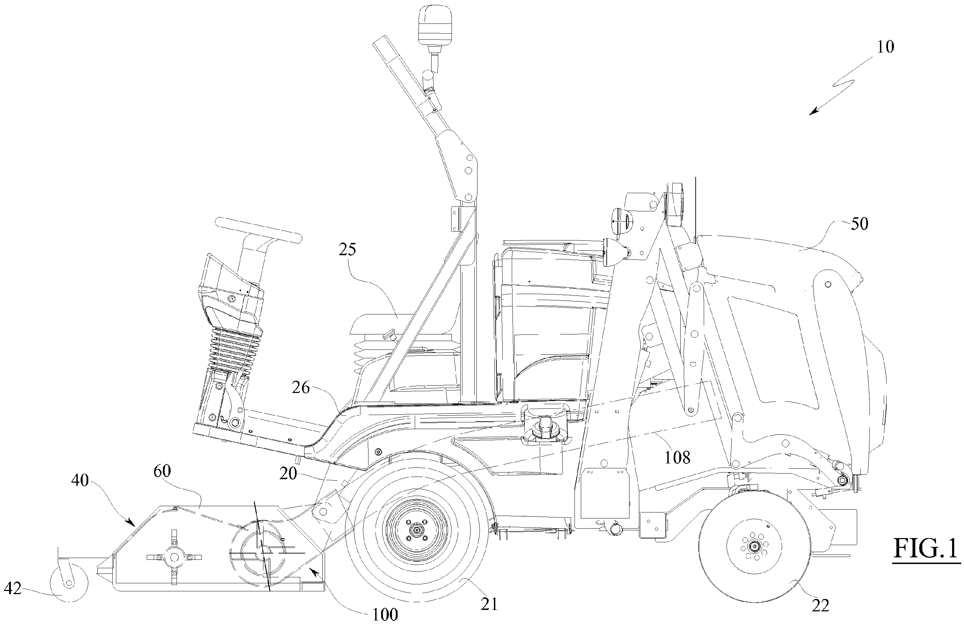

A conveying conduit 108 (drawn with dotted line in figure 1), which in turn is operatively connected to the storage container 50, may be operatively connected to the outlet opening 107.

The containment body 102 also comprises an inspection cover 105, which is connected in an articulated manner to the containment body 102 by means of a hinge 109.

This inspection cover 105 may be moved from a first position (illustrated in figure 2) wherein it defines the upper wall of the containment body 102, thus in any case leaving open the inlet opening 104, to a second position (not illustrated) wherein it is rotated upwards to open a further passage adapted to make accessible the inside of the containment body 102, for example to perform maintenance operations. Preferably, the cover 105 extends for the whole axial length of the containment body 102 and the rotation axis thereof - defined by the hinge 109 - is parallel to the rotation axis of the auger shaft 126.

Returning again to figure 4, the casing 122 of the auger 100 may comprise two further containment bodies 124 having substantially cylindrical shape or in any case tubular shape with arched cross-section, each of which being adapted to coaxially contain a respective helicoid 128 and 128' and which inner volume is axially in communication with the inner volume of the first central containment body 102.

In particular, each containment body 124 extends axially from the containment body 102 (which is interposed therebetween) and a lateral side 61 of the guard 60.

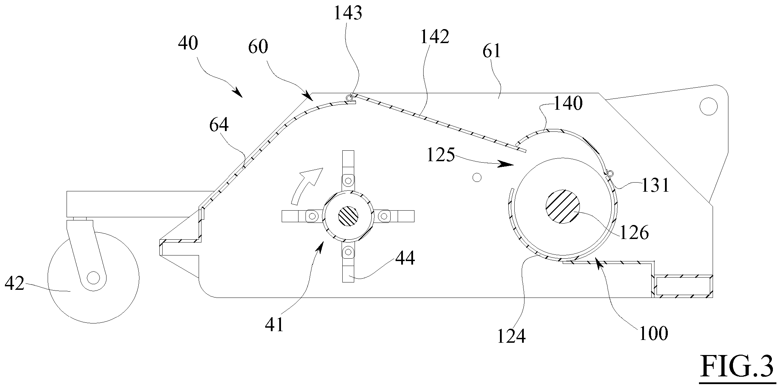

Each containment body 124 has, at the lateral surface, a corresponding inlet opening 125 of the cut grass facing towards the cutting tool 41 (see fig. 3).

Also this inlet opening 125 is substantially shaped like a slit that has a main size in direction parallel to the rotation axis of the cutting tool 41 and that preferably extends for the whole length of the containment body 124.

Preferably, the inlet openings 125 of the two containment bodies 124 are aligned with each other and with the inlet opening 104 of the central containment body 102, along a direction parallel to the rotation axis of the cutting tool 41.

Each containment body 124 may also be associated with a respective inspection cover 140.

Said inspection cover 140 is articulated to the containment body 124 by means of a hinge 131 so as to rotate from a first position (illustrated in figure 3) wherein it defines the upper wall of the containment body 124, thus in any case leaving open the inlet opening 125, to a second position (not illustrated) wherein it is rotated upwards to open a further passage adapted to allow access to the auger shaft 126, for example to perform maintenance operations.

Preferably, each inspection cover 140 extends for the whole axial length of the respective containment body 124 and the rotation axis thereof, defined by the hinge 131, is parallel to the rotation axis of the auger shaft 126.

It is worth pointing out that although reference is made in the embodiment illustrated above to a plurality of separate containment bodies, in other embodiments the casing 122 of the auger 100 could be made in the shape of a single containment body, having for example a substantially cylindrical shape or in any case tubular with arched section, which may extend axially for the whole space comprised between the lateral sides 61 of the guard 60 and may be adapted to coaxially contain the whole screw element 121.

Rather than a plurality of separate inlet openings, the casing 122 of the auger 100 could also comprise a single inlet opening, which could be shaped like a slit that has a main size in direction parallel to the rotation axis of the cutting tool 41 and that preferably extends for the whole length of the cutting tool 41 itself.

Similarly, rather than a plurality of inspection covers, the casing 122 of the auger 100 could comprise a single openable inspection cover, which could be articulated to the containment body by means of a hinge with rotation axis parallel to the rotation axis of the auger shaft 126, and could extend for the whole axial length of the containment body itself.

Regardless of these considerations, the casing 122 of the auger 100 could further accommodate a grass accelerator 101, which is preferably arranged close to the outlet opening 107.

In the embodiment illustrated in figures 2 and 4, the accelerator 101 comprises a plurality of blades 130, which are fixed integrally to the central portion 110 of the auger shaft 126.

In particular, the blades 130 may be made in the shape of planar bodies, oriented parallel to the rotation axis of the auger shaft 126 and fastened like a star about it, for example so as to be angularly equally spaced from one another.

The fastening of the blades 130 to the auger shaft 126 may occur by welding or by means of any other known system.

In this manner, the rotation of the auger shaft 126 automatically also puts into rotation the blades 130 of the accelerator 101, which project the cut grass, which is conveyed in the central area of the auger 100 by the helicoids 128 and 128', towards the outlet opening 107, and from here towards the storage container 50.

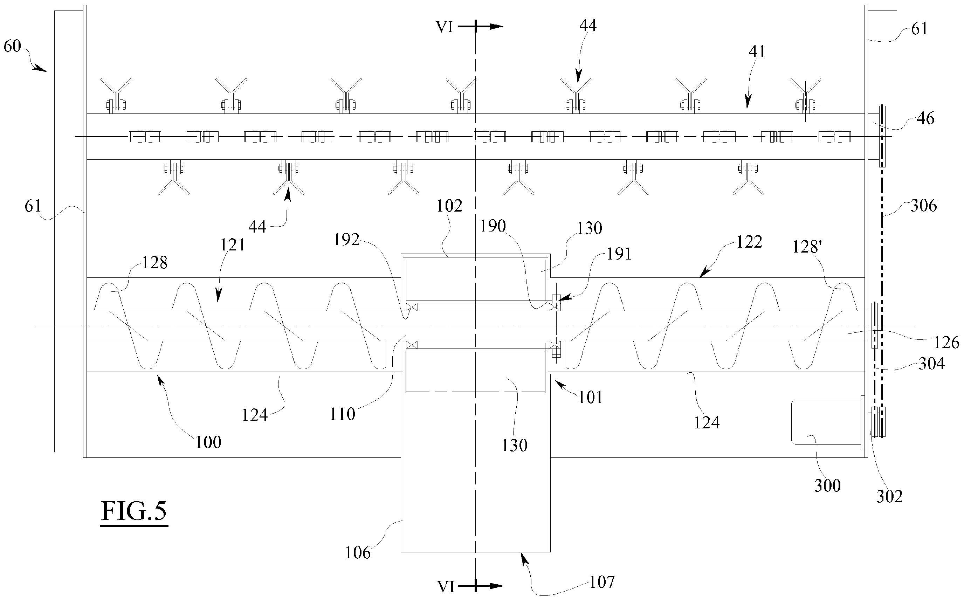

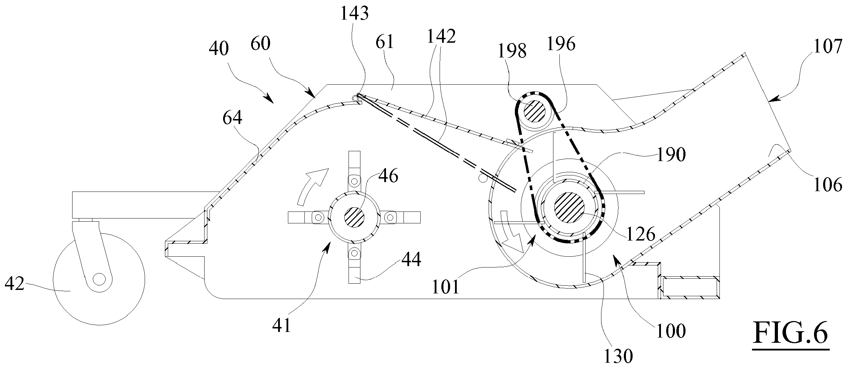

According to a different embodiment of the present invention illustrated in figures 5 and 6, the blades 130 of the accelerator 101 may be fastened to a sleeve 190, which is mounted coaxial on the auger shaft 126 so as to be free in rotation.

In particular, the sleeve 190 is arranged at the central portion 110 of the auger shaft 126.

One or more bearings 192 that allow the sleeve 190 to freely rotate on the auger shaft 126 are arranged between the sleeve 190 of the accelerator 101 and the auger shaft 126.

According to this embodiment, the auger shaft 126 and the sleeve 190 are connected to separate motion transmission systems in such a manner that the auger shaft 126 and the sleeve 190 may rotate at different speeds and may be independently actuated from each other.

In particular, an auger gear 191 (see fig. 5) may be fastened integral at one end of the sleeve 190, which auger gear may be kinematically connected, for example by means of a belt or a chain 196 (see fig. 6), to a motor shaft 198 that is separate from and operatively independent of the one that actuates the auger shaft 126.

Also in this case, the actuation and rotation of the blades 130 allows projecting the cut grass toward the outlet opening 107 and therefore towards the storage container 50.

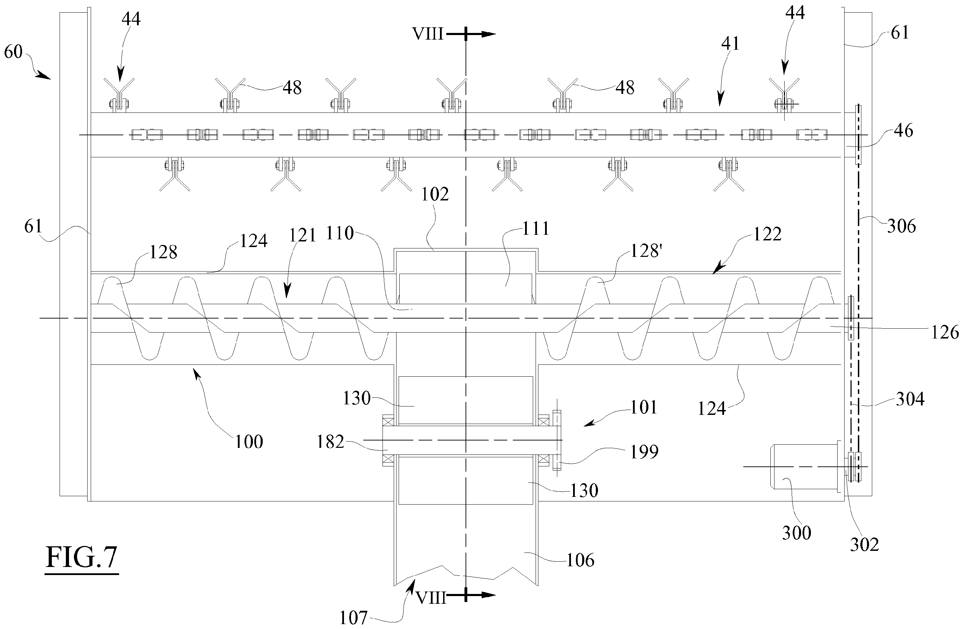

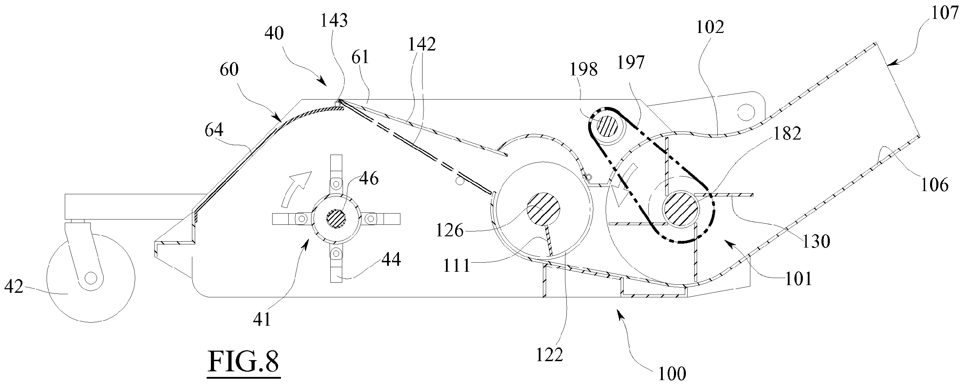

According to a third embodiment of the present invention illustrated in figures 7 and 8, the blades 130 of the accelerator 101 are fastened to a separate support shaft 182, which has rotation axis parallel to the rotation axis of the auger shaft 126.

The support shaft 182 may be positioned at the back of the auger shaft 126, with respect to the direction of travel of the lawnmower 10, for example mounted inside the conduit 106 that defines the outlet opening 107.

According to the embodiment described above, the auger shaft 126 and the support shaft 182 may be connected to separate actuation systems so as to independently rotate with respect to each other.

For example but not exhaustively, the support shaft 182 of the accelerator 101 may be actuated in rotation by a motor shaft 198 (see fig. 8), independently of the motor 300 that actuates the auger shaft 126, and by a belt or chain 197, which is adapted to kinematically connect said motor shaft 198 with a auger gear 199 (see fig. 7) keyed on one end of the support shaft 182.

Also in this case, by putting into rotation the support shaft 182, the blades 130 are capable of projecting the cut grass towards the outlet opening 107 and therefore towards the storage container 50.

However, it is preferable in any case for there to be fastened at least one further blade 111 on said central portion 110 since the blades 130 are spaced apart from the central portion 110 of the auger shaft 126 in which the grass transported by the helicoids 128 and 128' condenses.

In this manner, the rotation of the blade 111, actuated by the auger shaft 126, allows pushing the cut grass along the conduit 106 towards accelerator 101.

That disclosed above being understood, an important aspect of the present solution provides for the guard 60 of the cutting tool 41 to comprise at least one movable wall 142, which is adapted to move between a first operating position (illustrated with a solid line in figure 2, 6 and 8) and a second operating position (illustrated with a dotted line).

In the first operating position, the movable wall 142 establishes a direct communication between the inner volume of the guard 60, in which the cutting tool 41 is contained, and the inlet openings 104 and 125 of the casing 122 of the auger 100 so that the cut grass may enter the latter to be collected.

Vice versa, in the second operating position, the movable wall 142 separates the inner volume of the guard 60 from all the inlet openings 104 and 145 of the casing 122 of the auger 100 so that the cut grass remains confined in said inner volume and falls by gravity onto the ground, thus achieving a cutting mode without collection (e.g. mulching cutting).

In the embodiment illustrated in the drawings, the movable wall 142 is placed at a higher height with respect to the rotation axis of the cutting tool 41 and extends, with respect to the direction of travel of the lawnmower 10 - in the space comprised between the cutting tool 41 and the auger 100 - for example joining to the covering wall 64.

To switch from the first to the second operating position, the movable wall 142 is adapted to oscillate by rotating about a hinging axis parallel to the rotation axis of the cutting tool 41.

In particular, the movable wall 142 may have a planar shape and may extend longitudinally along the whole space comprised between the lateral sides 61 of the guard 60.

In cross-section, the movable wall 142 may also have a free edge close to the auger 100 and an opposite engaged edge, which is placed at a distance from the auger 100 and at which the hinging axis is located.

The hinging axis may be defined for example by a hinge 143 that connects the movable wall 142 to the covering wall 64 and/or to the two lateral sides 61 of the guard 60.

When the movable wall 142 is in the first operating position, the free edge is placed above or substantially at the same height as the upper edge of the inlet openings 104 and 125, thus putting them in communication with the inner volume of the guard 60. When the movable wall 142 is in the second operating position, the free edge is lower and substantially at the same height as the lower edge of the inlet openings 104 and 125, thus separating and isolating them from the inner volume of the guard 60. Naturally, the operation of the movable wall 142 would also be the same in the case in which the inlet openings 104 and 125 were replaced by a single inlet opening that extends longitudinally for the whole length of the casing 122 of the auger 100.

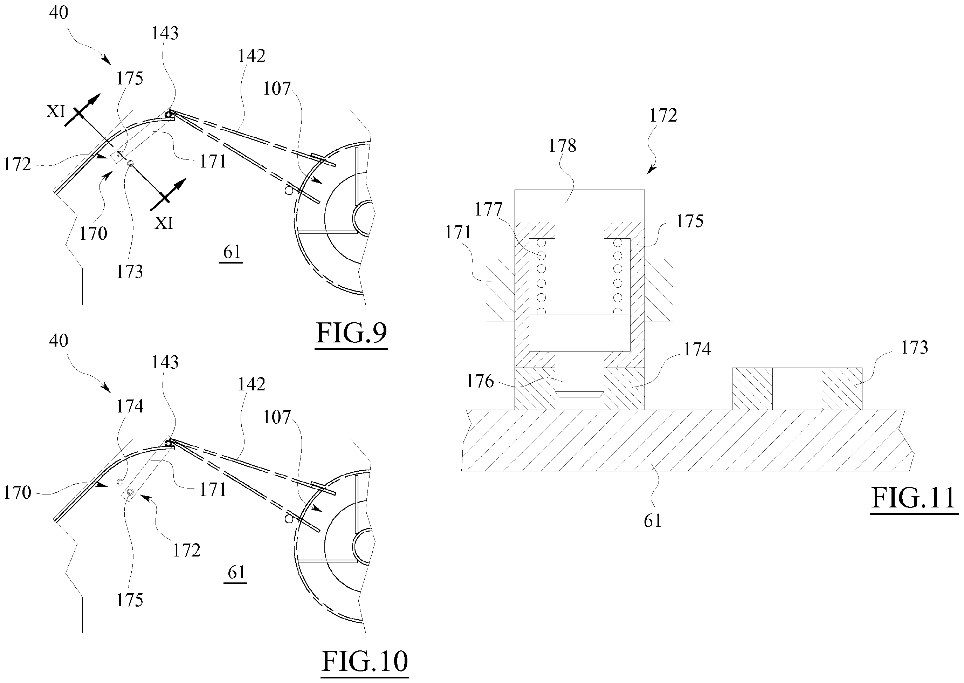

To allow the oscillation of the movable wall 142 between the first and the second operating position, the cutting device 40 may comprise a control apparatus - indicated globally with 170 in figure 9 and 10 - which is accessible from the outside of the guard 60.

In the embodiment illustrated, this control apparatus 170 comprises a manually-operated or motorized lever 171, which is positioned outside the guard 60, for example adjacent to one of the lateral sides 61.

This lever 171 is mechanically connected to the movable wall 142 in such a manner that a rotation of the lever 171 about the rotation axis thereof corresponds to a rotation of the movable wall 142 about the hinging axis.

For example, the lever 171 may be rigidly connected to the movable wall 142 so that the rotation axis of the lever 171 coincides with the hinging axis of the movable wall 142.

However, it is not excluded in other embodiments for the lever 171 to have a separate rotation axis from the hinging axis of the movable wall 142 and for it to be mechanically connected to the latter by means of a suitable motion transmission system. The lever 171 may also be associated with a locking device 172 adapted to lock the movable wall 142 respectively in the first operating position or in the second operating position.

This locking device 172 may comprise two bushings 173 and 174 fastened to the guard 60, for example on the lateral side 61 adjacent to the lever 171, and a third bushing 175 fastened to the lever 171, in eccentric position with respect to the rotation axis of the latter.

The third bushing 175 is adapted to be aligned with the bushing 173 when the movable wall 142 is in the first operating position, and instead to be aligned with the bushing 174 when the movable wall 142 is in the second operating position.

The locking device 172 also comprises a pin 176 (see fig. 11), which is inserted in the bushing 175 of the lever 171 and is selectively adapted to also be inserted in bushing 173 or in bushing 174 of the guard 60 so as to act as bolt.

In particular, the pin 176 is preferably slidingly coupled to the bushing 175 of the lever 171 with respect to which it may slide between an extracted position (shown in figure 11) in which it engages in bushing 173 or in bushing 174, and a retracted position in which it frees said engagement, thus allowing the rotation of the lever 171 and therefore of the movable wall 142.

The locking system may also comprise a spring 177 placed inside the bushing 175 to constantly push the pin 176 towards extracted position, and a handle 178 which may be grasped by a user to manually move the pin 176 from the extracted position to the retracted position, thus countering the action of said spring 177.

Obviously, an expert in the field may make several technical-applicative modifications to all that above, without departing from the scope of the invention as hereinbelow claimed.

For example, the auger 100 described in the preceding disclosure could be replaced by any other collection system that comprises a casing provided with at least one inlet opening adapted to receive the cut grass from the cutting tool 41, and with an outlet opening adapted to be connected with the storage container 50, and at least one conveyor member, for example a rotating member like the ones described above, a sliding belt or other, which is accommodated inside said casing to convey the grass from the inlet opening towards the outlet opening.

## Claims

1. A cutting device (40) for a lawnmower (10) comprising:
- a cutting tool (41) having horizontal rotation axis,
- a guard (60) adapted to delimit an inner volume wherein there is accommodated the cutting tool (41), and
- a system (100) for collecting the cut grass,
wherein said collection system (100) comprises:
- a casing (122) provided with at least one inlet opening (104, 125) and with one outlet opening (107) for the cut grass, and
- at least one conveyor member (121) placed inside the casing (122) and adapted to convey the cut grass from the inlet opening (104, 125) towards the outlet opening (107),
wherein the guard (60) of the cutting tool (41) comprises at least one wall (142) that is movable between a first operating position wherein the inner volume of the guard (60) communicates with the inlet opening (104, 125) of the casing (122) of the collection system (120), and a second operating position wherein the inner volume of the guard (60) is separated from the inlet opening (104, 125) of the casing (122) of the collection system (120),
**characterised in that** the conveyor member of the collection system (100) is a screw element (121) having rotation axis parallel to the rotation axis of the cutting tool (41).

2. A cutting device (40) according to claim 1, wherein the inlet opening (104, 125) of the casing (122) of the collection system (100) has a main size that extends parallel to the rotation axis of the cutting tool (41).

3. A cutting device (40) according to claim 2, wherein said main size of the inlet opening (104, 125) has a length that is at least equal to the length of the cutting tool (41).

4. A cutting device (40) according to claim 1 or 2, wherein the casing (122) of the collection system (100) comprises a plurality of inlet openings (104, 125) mutually aligned along a direction parallel to the rotation axis of the cutting tool (41).

5. A cutting device (40) according to any one of the preceding claims, wherein the movable wall (142) is adapted to move between the first operating position and the second operating position by rotating about a hinging axis parallel to the rotation axis of the cutting tool (41).

6. A cutting device (40) according to any one of the preceding claims, comprising a control apparatus (170) accessible from the outside of the guard (60), which is adapted to move the movable wall (142) between the first operating position and the second operating position.

7. A cutting device (40) according to claim 5 and 6, wherein said control apparatus (170) comprises a lever (171), hinged to the outside of the guard (160) according to a preset rotation axis, which is mechanically connected to the movable wall (142) so that a rotation of the lever (171) about the rotation axis thereof causes a rotation of the movable wall (142) about the hinging axis.

8. A cutting device (40) according to claim 7, wherein the lever (171) is associated with a locking device (172) adapted to lock the movable wall (142) respectively in the first operating position or in the second operating position.

9. A cutting device (40) according to claim 8, wherein said locking device (172) comprises a bushing (175) fastened to the lever (171), which is adapted to align with a first bushing (173) fastened to the guard (60) when the movable wall (142) is in the first operating position, and to align with a second bushing (174) fastened to the guard (60) when the movable wall is in the second operating position, a pin (176) being provided, which is adapted to engage in the bushing (175) of the lever (171) and simultaneously in the first or in the second bushing (173, 174) of the guard (60).

10. A cutting device (40) according to claim 8, wherein the pin (176) is inserted in the bushing (175) of the lever (171) so as to slide between an extracted position wherein it is adapted to engage also in the first or in the second bushing (173, 174) of the guard (60), and a retracted position wherein it is adapted to free said engagement, a spring (177) being associated with the lever (171) to push the pin (176) towards the extracted position.

11. A cutting device (40) according to any one of the preceding claims, wherein said screw element (121) may comprise:
- an auger shaft (126),
- a first helicoid (128) fastened to a first portion of the auger shaft (126), and
- a second helicoid (128) fastened to a second portion of the auger shaft and having opposite winding direction with respect to the first helicoid (128),
wherein said first and second helicoid (128, 128') are axially separated and spaced apart from each other, thus leaving uncovered a central portion (110) of the auger shaft (126).

12. A lawnmower (10) comprising a support frame (20) to which there is associated a cutting device (40) according to any one of the preceding claims, and a storage container (50) operatively connected to the outlet (107) of the casing (122) of the collection system (120).

## Patentansprüche

1. Schneidvorrichtung (40) für einen Rasenmäher (10), umfassend:
- ein Schneidwerkzeug (41) mit horizontaler Drehachse,
- eine Schutzvorrichtung (60), die geeignet ist, ein Innenvolumen zu begrenzen, in dem das Schneidwerkzeug (41) untergebracht ist, und
- ein System (100) zum Sammeln des geschnittenen Grases,
wobei das Sammelsystem (100) umfasst:
- ein Gehäuse (122), das mit mindestens einer Einlassöffnung (104, 125) und einer Auslassöffnung (107) für das geschnittene Gras versehen ist, und
- mindestens ein Förderelement (121), das im Inneren des Gehäuses (122) angeordnet ist und geeignet ist, das geschnittene Gras von der Einlassöffnung (104, 125) zur Auslassöffnung (107) zu befördern,
wobei die Schutzvorrichtung (60)
des Schneidwerkzeugs (41) mindestens eine Wand (142) umfasst, die zwischen einer ersten Betriebsposition, in der das Innenvolumen der Schutzvorrichtung (60) mit der Einlassöffnung (104, 125) des Gehäuses (122) des Sammelsystems (120) in Verbindung steht, und einer zweiten Betriebsposition, in der das Innenvolumen der Schutzvorrichtung (60) von der Einlassöffnung (104, 125) des Gehäuses (122) des Sammelsystems (120) getrennt ist, beweglich ist,
**dadurch gekennzeichnet, dass**
das Förderelement des Sammelsystems (100) ein Schneckenelement (121) ist, dessen Drehachse parallel zur Drehachse des Schneidwerkzeugs (41) verläuft.

2. Schneidvorrichtung (40) nach Anspruch 1, wobei die Einlassöffnung (104, 125) des Gehäuses (122) des Sammelsystems (100) eine Hauptgröße aufweist, die sich parallel zur Drehachse des Schneidwerkzeugs (41) erstreckt.

3. Schneidvorrichtung (40) nach Anspruch 2, wobei die Hauptgröße der Einlassöffnung (104, 125) eine Länge aufweist, die mindestens gleich der Länge des Schneidwerkzeugs (41) ist.

4. Schneidvorrichtung (40) nach Anspruch 1 oder 2, wobei das Gehäuse (122) des Sammelsystems (100) eine Vielzahl von Einlassöffnungen (104, 125) umfasst, die entlang einer Richtung parallel zur Drehachse des Schneidwerkzeugs (41) ausgerichtet sind.

5. Schneidvorrichtung (40) nach einem der vorstehenden Ansprüche, wobei die bewegliche Wand (142) geeignet ist, sich durch Drehen um eine zur Drehachse des Schneidwerkzeugs (41) parallele Gelenkachse zwischen der ersten Betriebsposition und der zweiten Betriebsposition zu bewegen.

6. Schneidvorrichtung (40) nach einem der vorstehenden Ansprüche, umfassend eine von der Außenseite der Schutzvorrichtung (60) zugängliche Steuervorrichtung (170), die geeignet ist, die bewegliche Wand (142) zwischen der ersten Betriebsposition und der zweiten Betriebsposition zu bewegen.

7. Schneidvorrichtung (40) nach Anspruch 5 und 6, wobei die Steuervorrichtung (170) einen Hebel (171) umfasst, der an der Außenseite der Schutzvorrichtung (160) gemäß einer voreingestellten Drehachse angelenkt ist und mechanisch mit der beweglichen Wand (142) verbunden ist, so dass eine Drehung des Hebels (171) um seine Drehachse eine Drehung der beweglichen Wand (142) um die Gelenkachse bewirkt.

8. Schneidvorrichtung (40) nach Anspruch 7, wobei der Hebel (171) mit einer Verriegelungsvorrichtung (172) verbunden ist, die geeignet ist, die bewegliche Wand (142) jeweils in der ersten Betriebsposition oder in der zweiten Betriebsposition zu verriegeln.

9. Schneidvorrichtung (40) nach Anspruch 8, wobei die Verriegelungsvorrichtung (172) eine an dem Hebel (171) befestigte Buchse (175) umfasst, die geeignet ist, sich mit einer an der Schutzvorrichtung (60) befestigten ersten Buchse (173) auszurichten, wenn sich die bewegliche Wand (142) in der ersten Betriebsposition befindet, und sich mit einer zweiten an der Schutzvorrichtung (60) befestigten Buchse (174) auszurichten, wenn sich die bewegliche Wand in der zweiten Betriebsposition befindet, wobei ein Stift (176) vorgesehen ist, der geeignet ist, in die Buchse (175) des Hebels (171) und gleichzeitig in die erste oder in die zweite Buchse (173, 174) der Schutzvorrichtung (60) einzugreifen.

10. Schneidvorrichtung (40) nach Anspruch 8, wobei der Stift (176) so in die Buchse (175) des Hebels (171) eingesetzt ist, dass er zwischen einer herausgezogenen Position, in der geeignet ist, auch in die erste oder in die zweite Buchse (173, 174) der Schutzvorrichtung (60) einzugreifen, und einer eingezogenen Position, in der er geeignet ist, den Eingriff zu lösen, gleitet, wobei eine Feder (177) mit dem Hebel (171) verbunden ist, um den Stift (176) in die herausgezogene Position zu drücken.

11. Schneidvorrichtung (40) nach einem der vorstehenden Ansprüche, wobei das Schneckenelement (121) umfassen kann:
- eine Schneckenwelle (126),
- eine erste Spirale (128), die an einem ersten Abschnitt der Schneckenwelle (126) befestigt ist, und
- eine zweite Spirale (128), die an einem zweiten Abschnitt der Schneckenwelle befestigt ist und eine entgegengesetzte Windungsrichtung in Bezug auf die erste Spirale (128) aufweist,
wobei die erste und die zweite Spirale (128, 128') axial getrennt und voneinander beabstandet sind, wodurch ein zentraler Abschnitt (110) der Schneckenwelle (126) freigelegt wird.

12. Rasenmäher (10), umfassend einen Tragrahmen (20), dem eine Schneidvorrichtung (40) nach einem der vorstehenden Ansprüche zugeordnet ist, und einen Aufnahmebehälter (50), der mit dem Auslass (107) des Gehäuses (122) des Sammelsystems (120) in Wirkverbindung steht.

## Revendications

1. Dispositif de coupe (40) pour une tondeuse à gazon (10) comprenant :
- un outil de coupe (41) ayant un axe de rotation horizontal,
- un capot de protection (60) conçu pour délimiter un volume interne au sein duquel est logé l'outil de coupe (41), et
- un système (100) pour collecter l'herbe coupée,
dans lequel ledit système de collecte (100) comprend :
- une enceinte (122) munie d'au moins une ouverture d'entrée (104, 125) et d'une ouverture de sortie (107) pour l'herbe coupée, et
- au moins un organe transporteur (121) placé à l'intérieur de l'enceinte (122) et conçu pour transporter l'herbe coupée de l'ouverture d'entrée (104, 125) vers l'ouverture de sortie (107),
dans lequel le capot de protection (60)
de l'outil de coupe (41) comprend au moins une paroi (142) qui est mobile entre une première position de fonctionnement dans laquelle le volume interne du capot de protection (60) communique avec l'ouverture d'entrée (104, 125) de l'enceinte (122) du système de collecte (120), et une seconde position de fonctionnement dans laquelle le volume interne du capot de protection (60) est séparé de l'ouverture d'entrée (104, 125) de l'enceinte (122) du système de collecte (120),
**caractérisé en ce que**
l'organe transporteur du système de collecte (100) est un élément à vis (121) ayant un axe de rotation parallèle à l'axe de rotation de l'outil de coupe (41).

2. Dispositif de coupe (40) selon la revendication 1, dans lequel l'ouverture d'entrée (104, 125) de l'enceinte (122) du système de collecte (100) possède une dimension principale qui s'étend parallèlement à l'axe de rotation de l'outil de coupe (41).

3. Dispositif de coupe (40) selon la revendication 2, dans lequel ladite dimension principale de l'ouverture d'entrée (104, 125) possède une longueur qui est au moins égale à la longueur de l'outil de coupe (41).

4. Dispositif de coupe (40) selon la revendication 1 ou 2, dans lequel l'enceinte (122) du système de collecte (100) comprend une pluralité d'ouvertures d'entrée (104, 125) mutuellement alignées le long d'une direction parallèle à l'axe de rotation de l'outil de coupe (41).

5. Dispositif de coupe (40) selon l'une quelconque des revendications précédentes, dans lequel la paroi mobile (142) est conçue pour se déplacer entre la première position de fonctionnement et la seconde position de fonctionnement par une rotation autour d'un axe d'articulation parallèle à l'axe de rotation de l'outil de coupe (41).

6. Dispositif de coupe (40) selon l'une quelconque des revendications précédentes, comprenant un appareil de commande (170) accessible depuis l'extérieur du capot de protection (60), qui est conçu pour déplacer la paroi mobile (142) entre la première position de fonctionnement et la seconde position de fonctionnement.

7. Dispositif de coupe (40) selon les revendications 5 et 6, dans lequel ledit appareil de commande (170) comprend un levier (171), articulé à l'extérieur du capot de protection (160) selon un axe de rotation prédéfini, qui est mécaniquement relié à la paroi mobile (142) de sorte qu'une rotation du levier (171) autour de son axe de rotation entraîne une rotation de la paroi mobile (142) autour de l'axe d'articulation.

8. Dispositif de coupe (40) selon la revendication 7, dans lequel le levier (171) est associé à un dispositif de verrouillage (172) conçu pour verrouiller la paroi mobile (142) respectivement dans la première position de fonctionnement ou dans la seconde position de fonctionnement.

9. Dispositif de coupe (40) selon la revendication 8, dans lequel ledit dispositif de verrouillage (172) comprend une douille (175) fixée au levier (171), qui est conçue pour s'aligner avec une première douille (173) fixée au capot de protection (60) lorsque la paroi mobile (142) est dans la première position de fonctionnement, et pour s'aligner avec une seconde douille (174) fixée au capot de protection (60) lorsque la paroi mobile est dans la seconde position de fonctionnement, une goupille (176) étant prévue, qui est conçue pour venir en prise dans la douille (175) du levier (171) et simultanément dans la première ou dans la seconde douille (173, 174) du capot de protection (60).

10. Dispositif de coupe (40) selon la revendication 8, dans lequel la goupille (176) est insérée dans la douille (175) du levier (171) de façon à coulisser entre une position extraite dans laquelle elle est conçue pour venir en prise également dans la première ou dans la seconde douille (173, 174) du capot de protection (60), et une position rétractée dans laquelle elle est conçue pour libérer ladite mise en prise, un ressort (177) étant associé au levier (171) pour pousser la goupille (176) vers la position extraite.

11. Dispositif de coupe (40) selon l'une quelconque des revendications précédentes, dans lequel ledit élément à vis (121) peut comprendre :
- un arbre de vis d'Archimède (126),
- un premier hélicoïde (128) fixé à une première partie de l'arbre de vis d'Archimède (126), et
- un second hélicoïde (128) fixé à une seconde partie de l'arbre de vis d'Archimède et ayant une direction d'enroulement opposée par rapport au premier hélicoïde (128), dans lequel lesdits premier et second hélicoïdes (128, 128') sont axialement séparés et espacés l'un de l'autre, laissant ainsi découverte une partie centrale (110) de l'arbre de vis d'Archimède (126).

12. Tondeuse à gazon (10) comprenant un châssis de support (20) auquel est associé un dispositif de coupe (40) selon l'une quelconque des revendications précédentes, et un contenant de stockage (50) relié de manière fonctionnelle à la sortie (107) de l'enceinte (122) du système de collecte (120).
